# EUROPÄISCHE PATENTANMELDUNG

(11) **EP 0 855 213 A2**
(43) Veröffentlichungstag der Anmeldung: **29.07.1998**
(21) Anmeldenummer: 97121275.8
(22) Anmeldetag: 04.12.1997
(51) Int. Cl.: B01D 63/02

(54) **Vorrichtung mit Flüssigkeitsfilterelement aus Hohlkörpern**

(30) Priorität: 22.01.1997 DE 19701994
(71) Anmelder: FILTERWERK MANN & HUMMEL GmbH, 71631 Ludwigsburg (DE)
(72) Erfinder: Rösgen, André, 73630 Remshalden (DE)
(74) Vertreter: Voth, Gerhard, Dipl.-Ing.

(57) **Zusammenfassung**

Beschrieben wird ein Flüssigkeitsfilterelement mit wenigstens einem Hohlkörper (1), wobei wenigstens das eine Ende des wenigstens einen Hohlkörpers (1) in einer Trägermatrix (2) eingebunden ist sowie wenigstens das andere Ende des wenigstens einen Hohlkörpers (1) in einer Trägermatrix (2) eingebunden ist, wobei das Flüssigkeitsfilterelement (3) wenigstens einen Flüssigkeitseinlaß (4) und einen Flüssigkeitsauslaß (5) aufweist, wobei das Flüssigkeitsfilterelement (3) über wenigstens eine Haltevorrichtung (6) verfügt.

## Beschreibung

Die Erfindung betrifft ein Flüssigkeitsfilterelement sowie eine Vorrichtung zum Filtrieren von Flüssigkeiten.

Derartige Filterelemente sind z. B. aus der CH PS 677 737 bekannt. Dort wird eine Filteranordnung zur Entfernung von molekularen Partikeln aus einem Gasstrom mit einem Filtermodul dargestellt. Das Filtermodul beinhaltet ein Filterelement mit einer großen Anzahl Hohlfasern, die an ihrem oberen Ende miteinander verbunden sind, wobei die Kanäle oben offen sind. Die Hohlfasern bestehen aus Polypropylen, die eine mikroporige Membran bilden. Von Nachteil hierbei ist, daß derartige Filterelemente bis zur vollständigen Beaufschlagung betrieben werden, was zu einem ständig wachsenden Druckverlust und einer sinkenden Abscheideleistung führt.

Weiterhin ist aus der DE OS 26 52 405 ein Verfahren und Filter zum Filtrieren einer Flüssigkeit unter Verwendung eines Filters mit automatischer Reinigung durch Spülen der Filteroberfläche durch die Strömung der Flüssigkeit bekannt, wobei die zu filternde Flüssigkeit durch Filteroberflächen unterschiedlicher Feinheit durchgeleitet werden..
Nachteilig daran ist, daß der Abscheidegrad bei einer derartigen Anlage sehr stark variiert, was unangenehme Begleiterscheinungen für das Produkt mit sich bringt.

Des weiteren ist aus der DE OS 42 26 673 ein Verfahren zur Rückspülung von Filter-, Mikrofilter- und Ultrafltrationsanlagen bekannt, bei dem das Permeat zunächst frei aus dem Modul über einen Zwischendruckbehälter ausläuft und beim Rückspülprozeß direkt am Permeatausgang des Modus über einen Druckluftanschluß Druckluft oder ein anderes gasförmiges Medium eingeblasen wird, welche über eine Düse mit speziellen, fein versprühten Lösungsmitteln oder Medien gesättigt wurde, die zunächst das Restpermeat durch das Modul zurückspült und dann das versprühte Lösungsmittel in die Poren der Membran drückt, anschließend wird über ein zweites Druckluftventil, welches sich am Druckbehälter befindet, mit reiner Druckluft das im Behälter befindliche Permeat oder mit klarem Wasser zurückgespült, wodurch die Membran nachgereinigt wird. Hierbei ist von Nachteil, daß zur Rückspülung des Filterelements ein zusätzliches Medium, Luft oder ähnliches, eingetragen werden muß, was zu Störungen, bzw. Verunreinigungen führen kann, sieht man einmal vom konstruktiven Zusatzaufwand für die notwendigen Eintragsvorrichtungen ab.Der Erfindung liegt deshalb die Aufgabe zugrunde, ein Flüssigkeitfilterelement, bzw. eine Vorrichtung zum Filtrieren von Flüssigkeiten zu schaffen, das die eingangs genannten Nachteile vermeidet und ein Filterelement bzw. eine Vorrichtung zum Filtrieren von Flüssigkeiten schafft, bei denen mit geringem Aufwand eine effektives Trennergebnis, insbesondere durch eine gute Abreinigungswirkung sowie durch die Vermeidung beweglicher Teile im Filter eine geringe Störanfälligkeit erzeugt wird.

Erfindungsgemäß wird die Aufgabe dadurch gelöst, daß ein Flüssigkeitsfilterelement mit wenigstens einem Hohlkörper, wobei wenigstens das eine Ende des wenigstens einen Hohlkörpers in einer Trägermatrix eingebunden ist sowie wenigstens das andere Ende des wenigstens einen Hohlkörpers in einer Trägermatrix eingebunden ist, wobei das Flüssigkeitsfilterelement wenigstens einen Flüssigkeitseinlaß und einen Flüssigkeitsauslaß aufweist, wobei das Flüssigkeitsfilterelement über wenigstens eine Haltevorrichtung verfügt, welche zur leichteren Montage des Flüssigkeitsfilterelements dient..

Eine vorteilhafte Weiterbildung der Erfindung sieht vor, daß der Hohlkörper aus geschäumtem Kunststoffkapillaren oder Polymerfolien oder Polymer- oder Metallfasern oder Keramikelementen besteht, weisen diese Materialien doch eine gewisse Resistenz gegenüber chemischen Verbindungen auf.

In einer anderen vorteilhaften Weiterbildung ist vorgesehen, daß der Hohlkörper eine Stützmatrix im Innern oder außerhalb des Hohlkörpers aufweist, der als Rückspülschutz gegen das Zusammenfallen und -kleben hilft.

Weiter kann man erfindungsgemäß vorsehen, daß beide Enden des Hohlkörpers in der selben Trägermatrix eingebunden sind, was dazu beiträgt, daß die Längenabmessungen reduziert werden.

Eine vorteilhafte Weiterbildung der Erfindung sieht vor, daß beide Enden des Hohlkörpers 1 parallel zueinander eingebunden sind, auf diese Weise sind Flüssigkeitsfilterelemente herzustellen, die über eine sehr hohe Filteroberfläche bei gleichzeitig geringen Längenabmaßen verfügt. Gleichzeitig ist das Flüssigkeitsfilterelement, da es nur eine Haltevorrichtung benötigt, kürzer und läßt sich wesentlich einfacher austauschen, da nur ein kurzes Gehäuse vorhanden und notwendig ist, die Hohlfasern werden hierbei in Schleifen gelegt.

In einer anderen vorteilhaften Weiterbildung ist vorgesehen, daß der Flüssigkeitseinlaß über die Mantelfläche der Hohlkörpers erfolgt. Die Verwendung der Hohlfaseroberfläche, insbesondere der äußeren Oberfläche garantiert ein Maximum an Filterfläche. Prinzipiell wäre die Filterung auch von innen nach außen denkbar, jedoch sind sowohl die Festigkeits- als auch die Filterflächenverhältnisse von außen nach innen günstiger, da der Filtrationsvorgang insbesondere mittels eines Druckgradienten vonstatten geht.

Weiter kann man erfindungsgemäß vorsehen, daß der Flüssigkeitsauslaß über die Enden der Hohlkörpers erfolgt. Dies hat Festigkeitsvorteile, zum anderen ist dadurch der Einsatz beispielsweise in einem Filterbehältergehäuse möglich

Eine vorteilhafte Weiterbildung der Erfindung sieht vor, daß die Trägermatrix Bestandteil der Haltevorrichtung ist. Dadurch kann die Trägermatrix als Flansch ausgebildet werden, der z. B. in einem Filterbehältergehäuse befestigt wird.

Dies spart Gewicht und Bearbeitungsschritte, wenn dieser Flansch z. B. simultan mit der Trägermatrixherstellung entsteht

In einer anderen vorteilhaften Weiterbildung ist eine Vorrichtung zum Filtrieren von Flüssigkeiten vorgesehen, umfassend wenigstens zwei Filterbehälter und wenigstens eine Pumpe, wobei jeder Filterbehälter über wenigstens einen Einlaß mit Mitteln zum Verschließen desselben und wenigstens einen Auslaß mit Mitteln zum Verschließen desselben sowie wenigstens einen Rückspülablaß mit Mitteln zum Verschließen desselben verfügt, wobei jeder Filterbehälter wenigstens ein Filterelement aufweist, wobei die Pumpe mit dem Einlaß jedes Filterbehälters kommuniziert und die Auslässe der Filterbehälter miteinander kommunizieren, wobei die Vorrichtung ein Filterelement nach einem oder mehreren der vorgenannten Ansprüche enthält. Hierbei ist von Vorteil, daß durch das Öffnen der Mittel zum Verschließen des Rückspülablasses und das gleichzeitige Schließen der Mittel zum Verschließen des Einlasses eines Filterbehälters dessen Flüssigkeitsfilterelement aufgrund der Kommunikation der Einlässe der Filterbehälter untereinander automatisch rückgespült wird, da sich im rückzuspülendem Filterbehälter der Druckgradient gleichmäßig umkehrt, da am geöffneten Rückspülablaß Umgebungsdruck herrscht, in den die Einlässe verbindenden Rohrleitung aber der Betriebsüberdruck. Auf diese Weise wird ein Zusetzen der Membran verhindert. Durch regelmäßiges Rückspülen kann das Rückspülen auf ein Minimum an Zeit reduziert werden, so daß meistens die Oberfläche aller in der Vorrichtung vorhandener Flüssigkeitsfilterelemente verfügbar ist. Derartige Filter werden beispielsweise bei der Aufbereitung von Kühl- bzw. Schmiermitteln verwendet. Ein weiterer Vorteil liegt in der Möglichkeit begründet die Vorrichtung automatisiert zu betreiben, ohne daß aufwendige Regelungen und zusätzliche Mittel zum Rückspülen erforderlich sind, indem die Mittel zum Rückspülen mittels einer einfachen Steuerschaltung aus z.B. elektrischen Steuerelementen, angesteuert werden. Alternativ kann die Steuerung auch Bestandteil einer die Filtriereinrichtung enthaltenden Anlage sein. Im einfachsten Fall reichen Zweiwege-Ventile aus, die mittels einer Zeitsteuerung geöffnet, bzw. geschlossen werden.

Weiter kann man erfindungsgemäß vorsehen, daß die Vorrichtung über Mittel zum Abreinigen des Filterelements verfügt, wie Schwinger Ultraschall, Impuls, die den negativen Druckgradient im Filterbehälter beim Rückspülen unterstützen, um die Rückspülzeit weiter zu verkürzen. Zum Rückspülen eines Filterbehälters wird mittels eines Steuersignales das Einlaßventil geschlossen und gleichzeitig das Rückspülventil geöffnet. Diese Ventilstellung bleibt solang existent, bis der Schmutzanfall erfahrungsgemäß rückgespült ist, es sind aber z.B. mittels einer zeitabhängigen ansteuerung beliebige Intervalle denkbar. Eine weitere Variante ist die Feststellung des Verschmutzungsgrades über den Grad des Druckverlustes an der Membran. Wobei bei einem bestimmten Druckverlust die Ventile in Rückspülstellung, Rückspülventil offen, Einlaßventil geschlossen, geschaltet werden. Bei Unterschreitung eines definierten Druckverlustes gehen die Ventile in Filtrierposition mit offenem Einlaßventil und geschlossenem Rückspülventil.

Eine vorteilhafte Weiterbildung der Erfindung sieht vor, daß die Schmutzablässe mit einem Schmutzauffangbehälter kommunizieren. Dies hat zum Vorteil, daß lediglich ein einziger Schmutzauffangbehälter erforderlich ist, was nicht nur Kosten spart sondern auch logistischen Aufwand bei der Entleerung. Wobei weitere Filterbehälter in beliebiger Zahl in der Weise nachrüstbar sind, daß sie parallel an die bestehende Anlage angeschlossen werden können. Zu diesem Zweck ist lediglich jeweils für den Flüssigkeitseinlaß, den Flüssigkeitsauslaß und die Rückspülleitung ein Abzweig von der Verbindungsleitung vorzusehen. Hierdurch läßt sich beinahe jede Kapazitätsanpassung vornehemen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert.

Die Zeichnungen zeigen:
- Figur 1: eine schematische Darstellung einer Vorrichtung zum Filtrieren
- Figur 2: eine schematische Darstellung der Vorrichtung aus Figur 1 beim Rückspülen
- Figur 3: einen Schnitt durch ein Flüssigkeitsfilterelement
- Figur 4: einen Schnitt durch ein Flüssigkeitsfilterelement
- Figur 5: einen Schnitt durch ein Flüssigkeitsfilterelement
- Figur 6: einen Schnitt durch ein Flüssigkeitsfilterelement

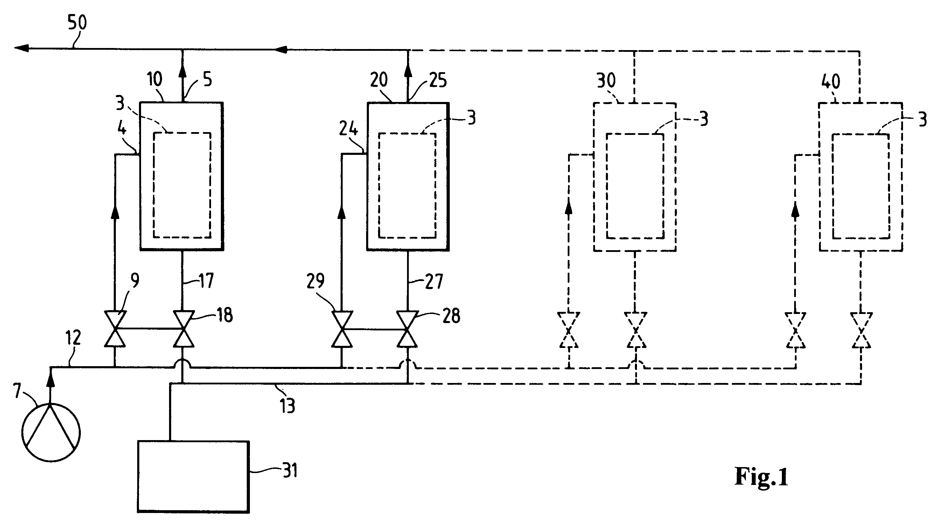

Die in Figur 1 gezeigte schematische Darstellung einer Vorrichtung zum Filtrieren von Flüssigkeiten umfasst ein Flüssigkeitsfilterelement 3, das in einem Filterbehälter 10 angeordnet ist. Derartige Filterbehälter 10, 20, 30, 40 können in beliebiger Anzahl parallel miteinander verbunden werden, wie dies in Figur 1 deutlich wird. Jeder Filterbehälter 10, 20, 30, 40 weist einen Flüssigkeitseinlaß 4, 24, etc. auf, der seinerseits mit einem Einlaßventil 9, 29, etc. über eine Verbindungsleitung kommuniziert. Alle Einlaßventile 9, 29, etc. kommunizieren ihrerseits mittels einer verzweigten Verbindungsleitung 12 mit der selben Pumpe 7. Ebenfalls weist jeder Filterbehälter 10, 20, etc. einen Flüssigkeitsauslaß 5, 25, etc. auf, der jeweils mit der Verbindungsleitung 50 kommuniziert. Weiterhin verfügt jeder Filterbehälter 10, 20, etc. über eine Rückspülleitung 17, 27, etc., die jeweils ein Rückspülventil 18, 28, etc. enthält, wobei die die Rückspülventile enthaltenden Rückspülleitungen alle in die verzweigte Verbindungsleitung 13 münden. Die Verbindungsleitung 13 ihrerseits mündet in den gemeinsamen Sammelraum 31, der die Rückspülfracht aufnimmt. Beim im in Figur 1 dargestellten Beispiel strömt die Flüssigkeit von der Pumpe 7 ausgehend durch die geöffneten Einlaßventile 9, 29, etc. durch das Flüssigkeitsfilterelement 3 hindurch über die Flüssigkeitsauslässe 5, 25, etc. in die gemeinsame Verbindungsleitung 50, von wo aus die gewonnene filtrierte Flüssigkeit in die Gesamtanlage, bzw. deren Schmiermittelvoratsbehälter geführt wird.

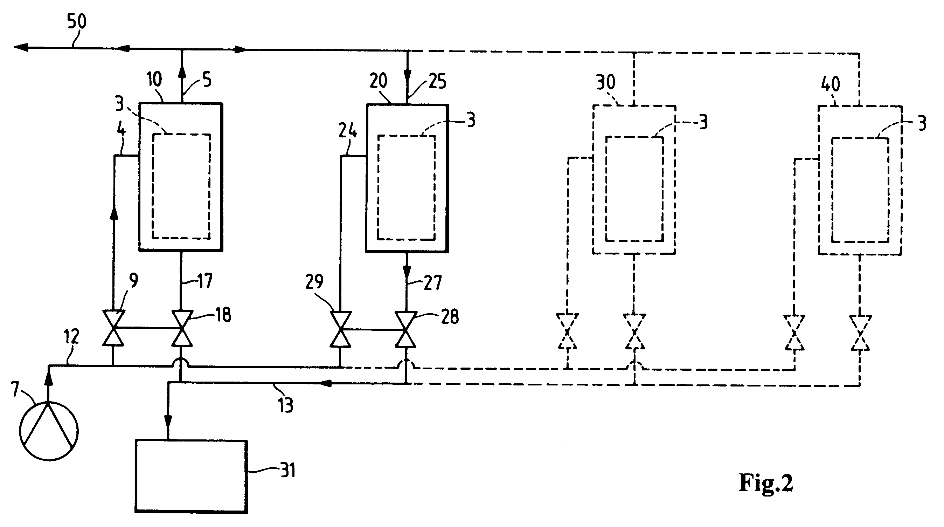

Das in Figur 2 dargestellte Schema einer Vorrichtung zum Filtrieren von Flüssigkeiten umfasst ein Flüssigkeitsfilterelement 3, das in einem Filterbehälter 10 angeordnet ist. Derartige Filterbehälter 10, 20, 30, 40 können in beliebiger Anzahl parallel miteinander verbunden werden, wie dies in Figur 1 deutlich wird. Jeder Filterbehälter 10, 20, 30, 40 weist einen Flüssigkeitseinlaß 4, 24, etc. auf, der seinerseits mit einem Einlaßventil 9, 29, etc. über eine Verbindungsleitung kommuniziert. Alle Einlaßventile 9, 29, etc. kommunizieren ihrerseits mittels einer verzweigten Verbindungsleitung 12 mit der selben Pumpe 7. Ebenfalls weist jeder Filterbehälter 10, 20, etc. einen Flüssigkeitsauslaß 5, 25, etc. auf, der jeweils mit der Verbindungsleitung 50 kommuniziert. Weiterhin verfügt jeder Filterbehälter 10, 20, etc. über eine Rückspülleitung 17, 27, etc., die jewiels ein Rückspülventil 18, 28, etc. enthält, wobei die die Rückspülventile enthaltenden Rückspülleitungen alle in die verzweigte Verbindungsleitung 13 münden. Die Verbindungsleitung 13 ihrerseits mündet in den gemeinsamen Sammelraum 31, der die Rückspülfracht aufnimmt. Beim im in Figur 2 dargestellten Beispiel strömt die Flüssigkeit von der Pumpe 7 ausgehend durch das geöffnete Einlaßventil 9 durch das Flüssigkeitsfilterelement 3 hindurch über den Flüssigkeitsauslaß 5 in die gemeinsame Verbindungsleitung 50, von wo aus die gewonnene filtrierte Flüssigkeit sowohl in die Gesamtanlage, bzw. deren Schmiermittelvorratsbehälter geführt wird, als auch über den eigentlichen Flüssigkeitsauslaß 25 von Filterbehälter 20, der, da das Rückspülventil28 geöffnet und das Einlaßventil 29 geschlossen ist, sich im Rückspülbetrieb befindet. Die Einlaß- und Rückspülventile der Vorrichtung sind gekoppelt, so daß beim Schließen z.B. des Einlaßventils das Rückspülventil des selben Filterbehälters geöffnet wird..

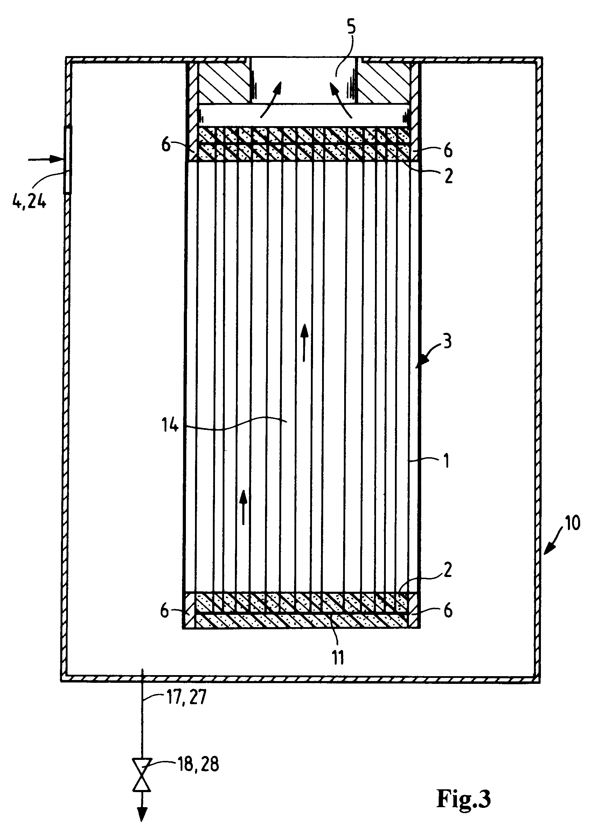

In dem in Figur 3 dargestellten Ausführungsbeispiel sind die Hohlkörper 1 als Hohlfasern ausgestaltet und ausgestreckt angeordnet, so daß sich deren Enden auf gegenüberliegenden Seiten des Flüssigkeitsfilterelements 3 befinden. Hier ist die Trägermatrix 2 derart ausgestaltet, daß auf der der Flüssigkeitsauslaßseite 5 gegenüberliegenden Seite die Hohlfaserenden in einer undurchlässigen Einbindung 11 angeordnet sind. Die Zuführung der zu filternden Flüssigkeit erfolgt über den Flüssigkeitseinlaß 4. Der Transport der gefilterten Flüssigkeit erfolgt im Inneren der Hohlfaser 14. Der Auslaß der gefilterten Flüssigkeit des Flüssigkeitsflterelements 3 erfolgt über die Enden der Hohlfasern, die auf der Seite des Flüssigkeitsauslaßes 5 in der Trägermatrix 2, die als Haltevorrichtung 6 ausgebildet ist und darüber im Filtergehäuse 10 befestigt ist, gefaßt sind. Der Transport des Rückspülgutes erfolgt über die Rückspülleitung 17, 27, die mittels Rückspülventil 18, 28 öffen- und schließbar ist.

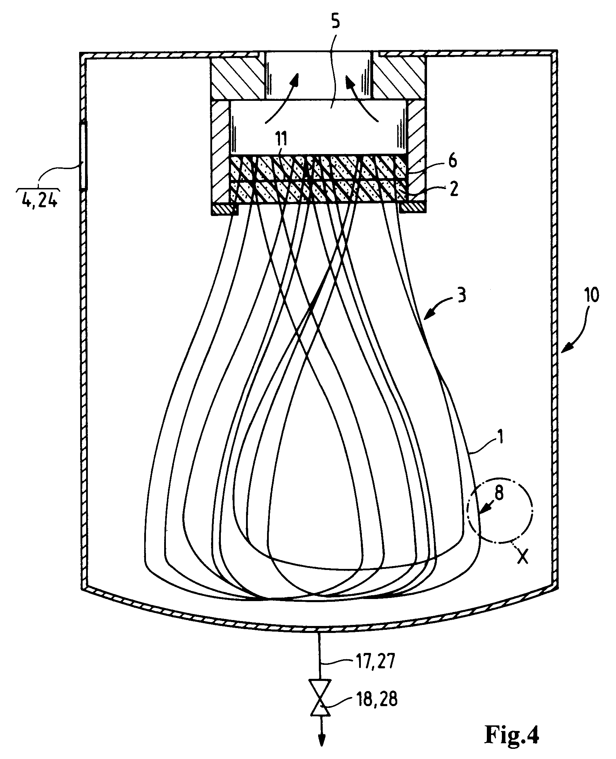

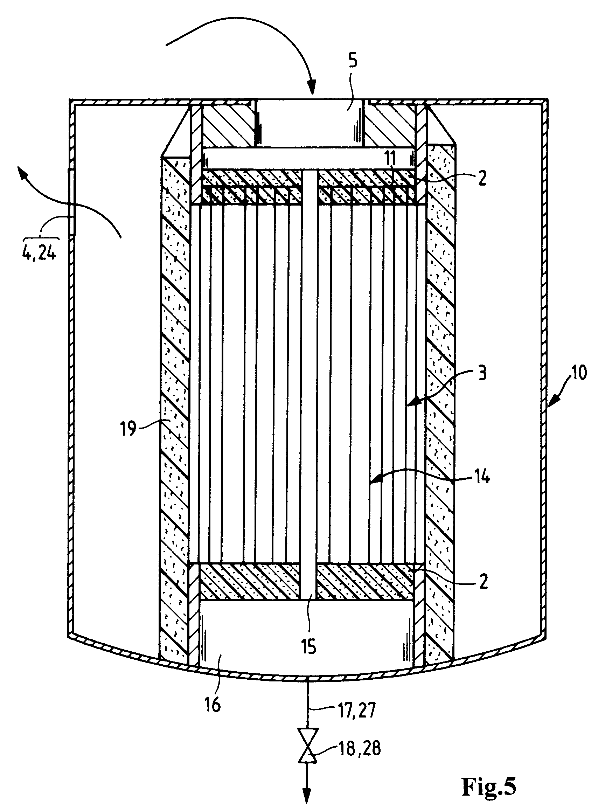

In der in der Figur 4 dargestellten Ausführungsform sind die Hohlkörper 1 von ca. 5000 Hohlfasern gebildet, die einen Innendurchmesser von ca. 300 µm und eine Trenngrenze von etwa 0,03-2 µm aufweisen mittels einer Trägermatrix 2 an ihren Enden derart zusammengefaßt, daß diese parallel zueinander angeordnet sind. Die Trägermatrix 2 ist hier derart ausgebildet, daß sie gleichzeitig die Haltevorrichtung 6 darstellt, mittels derer das Flüssigkeitsfilterelement 3 im Filterbehälter 10 dichtend befestigt ist. In einer spezielleren Ausgestaltung liegt die Trenngrenze des Flüssigkeitsfilterelementes 3 im Bereich von etwa 0,1 - 0,3 µm, wobei die jeweilige Länge der Hohlfasern von deren Kapillar-Innendurchmesser abhängt. Derartige Hohlfasern sind aus Polysulfon oder anderen Kunststoffmembranmaterialien gefertigt. In einer alternativen Ausgestaltung ist vorgesehen, daß dem Flüssigkeitsfilterelement 3 ähnlich wie in Figur 5 dargestellt ein Vorfilter vorgeschaltet ist, der zusätzlich vor mechanischen Beschädigungen des Flüssigkeitselements 3 schützt.

In einer alternativen Ausgestaltung ist die Trägermatrix derart ausgebildet, daß sie sämtliche Hohlfasern über deren gesamten Verlauf von einem Ende zum andern Ende umfaßt, wobei die Trägermatrix einen radialen Durchtritt der zu filternden Flüssigkeit hin zur Hohlfaser ermöglicht. Die zu filternde Flüssigkeit wird im beschriebenen Filterbehälter 10 in Figur 5 über den Flüssigkeitseinlaß 4 zugeführt. Der Abscheidevorgang findet an der Mantelfläche 8 der Hohlfaser statt. Der Abtransport der gefilterten Flüssigkeit findet im Inneren der Hohlfaser 14 statt. Die Trägermatrix ist derart ausgebildet, daß die Hohlfasern so eingebettet sind, daß die gefilterte Flüssigkeit lediglich durch die Hohlfaser 1, nicht aber durch die undurchlässige Einbindung 11 der Hohlfasern in der Trägermatrix 2 zum Flüssigkeitsauslaß 5 hin durchtreten kann. Die in Figur 5 dargestellte Anordnung der Hohlfasern ermöglicht die Verwendung von relativ kurzen Filterbehältern 10. In der dargestellten Variante ist das Flüssigkeitsfilterelement 3 fest mit dem Filterbehälter 10 verbunden. In einer alternativen Ausgestaltung ist jedoch denkbar, daß das Flüssigkeitsfilterelement 3 austauschbar innerhalb des Filterbehälters 10 angebracht ist. In einer weiteren alternativen Ausgestaltung ist vorgesehen, daß das Hohlfaserbündel lediglich einseitig gefaßt ist, wobei die anderen, nicht gefaßten Enden der Hohlfasern verschweißt sind, ähnlich einer Sackgasse, so daß die zu filternde Flüssigkeit über die Membranoberfläche eintritt und über das gefaßte offene Ende austreten kann.

Der Transport des Rückspülgutes erfolgt über die Rückspülleitung 17, 27, die mittels Rückspülventil 18, 28 öffen- und schließbar ist.

In dem in Figur 5 dargestellten Ausführungsbeispiel sind die Hohlkörper 1, die als Hohlfasern ausgebildet sind, ebenfalls wie in Figur 4 ausgestreckt angeordnet, so daß sich deren Enden auf gegenüberliegenden Seiten des Flüssigkeitsfilterelements 3 befinden. Der Transport der gefilterten Flüssigkeit erfolgt im Inneren der Hohlfaser 14. Hier ist die Trägermatrix 2 derart ausgestaltet, daß auf der der Flüssigkeitsauslaßseite 5 gegenüberliegenden Seite die Hohlfaserenden in der Trägermatrix 2 derart angeordnet sind, daß die gefilterte Flüssigkeit zentral auf der dem Flüssigkeitsauslaß 5 gegenüberliegenden Seite in einen Sammelraum 16 tritt und dann über eine zentrale Rückführung 15 im Innern des Flüssigkeitselements 3 durch dieses hin zum Flüssigkeitsauslaß gelangt. Der Flüssigkeitsauslaß 5 des Flüssigkeitsfilterelements 3 erfolgt über die zentrale Rückführung, die auf der Seite des Flüssigkeitsauslaßes 5 in der Trägermatrix 2, die als Haltevorrichtung 6 ausgebildet ist und darüber im Filtergehäuse 10 befestigt ist, gefaßt sind. In der Trägermatrix 2 sind die Enden der Hohlfasern mittels einer undurchlässigen Einbindung 11 eingebunden.
In diesem Ausführungsbeispiel ist ebenfalls ein Vorfilter 19 vorgeschaltet, das allerdings im gleichen Filterbehälter wie die Hohlfasern untergebracht ist und das die Grobfracht vorabscheidet. In einer speziellen Ausführungsform weist der Vorfilter etwa eine Trenngrenze von 5 µm auf, wobei dieser Vorfilter beispielsweise aus einer metallischen Folie, z.B. einer Nickelfolie besteht und einen mechanischen Schutz der das Hauptfilter bildenden Hohlfasern, die eine Trenngrenze von etwa 0,1 µm aufweisen, darstellt. Im Anschluß an den Sammelraum 16 wird über eine Rückspülleitung 17, 27 mittels Rückspülventil 18, 28 die Rückspülung des Filterbehälters 10 bzw. dessen Flüssigkeitsfilterelements 3 möglich. Hierbei wird durch Öffnen des Ventils 18 die Rückspülung ermöglicht, in dem ein sogenannter Cross-Flow-Effekt im Flüssigkeitsfilterelement entsteht. Diese Rückspülung erfolgt beispielsweise im Zusammenspiel mit einem weiteren Rückspülventil zyklisch, das mit der Gesamtapparatur zusammenwirkt, welches nicht extra dargestellt ist. Die Rückspülung erfolgt beispielsweise entweder mittels eines Lösungsmittels oder eines Druckstoßes, z.B. aus einer Druckluftleitung. Die Rückspülmedien werden zu diesem Zweck über die Rückspülleitung 17 dem Filterbehälter 10 bzw. dem darin befindlichen Flüssigkeitsfilterelement 3 entgegen der Filterrichtung zugeführt. Ebenfalls kann die Rückspülung mittels einer Strömungsumkehr in der Weise erfolgen, daß die gefilterte Flüssigkeit entgegen der Strömungsrichtung durch die Hohlfasermembrane zum Durchgang gebracht wird, wobei dann das der Rückspülleitung 17 nachfolgende Rückspülventil zyklisch geöffnet wird und die Rückspülleitung somit den Abfluß der Rückspülflüssigkeit in Zeitabständen ermöglicht.

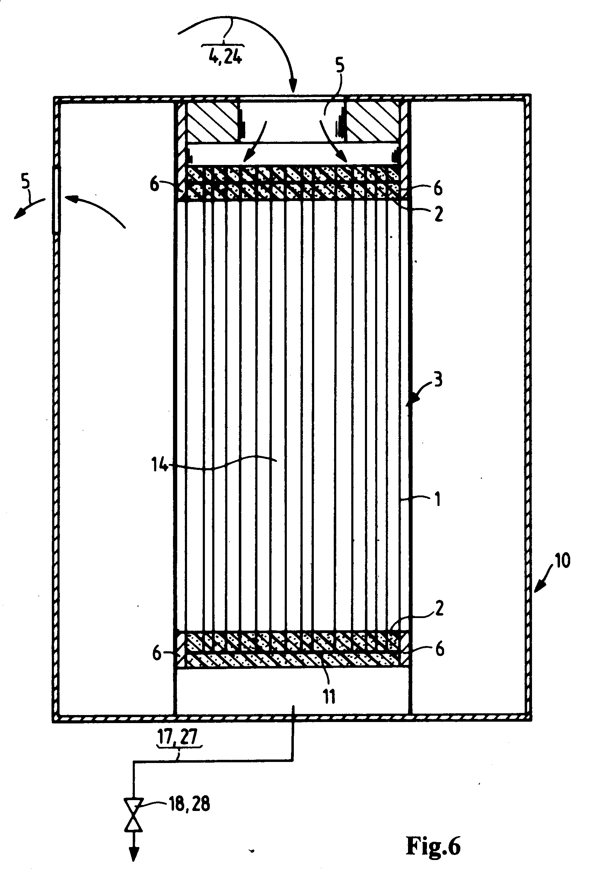

In dem in Figur 6 dargestellten Ausführungsbeispiel sind die Hohlkörper 1 als Hohlfasern ausgestaltet und ausgestreckt angeordnet, so daß sich deren Enden auf gegenüberliegenden Seiten des Flüssigkeitsfilterelements 3 befinden. Hier ist die Trägermatrix 2 derart ausgestaltet, daß auf der der Flüssigkeitsauslaßseite 5 gegenüberliegenden Seite die Hohlfaserenden in einer undurchlässigen Einbindung 11 angeordnet sind. Die Zuführung der zu filternden Flüssigkeit erfolgt über den Flüssigkeitseinlaß 4, 24. Der Transport der gefilterten Flüssigkeit erfolgt außerhalb der Hohlfaser 14. Der Auslaß der gefilterten Flüssigkeit des Flüssigkeitsfilterelements 3 erfolgt über die Mantelfläche der Hohlfasern. Die Hohlfasern sind auf der Seite des Flüssigkeitsauslaßes 5 in der Trägermatrix 2, die als Haltevorrichtung 6 ausgebildet ist und darüber im Filtergehäuse 10 befestigt ist, gefaßt. Der Transport des Rückspülgutes erfolgt über die Rückspülleitung 17, 27, die mittels Rückspülventil 18, 28 öffen- und schließbar ist.

### Bezugszeichenliste

- 1: Hohlkörper
- 2: Trägermatrix
- 3: Flüssigkeitsfilterelement
- 4: Flüssigkeitseinlaß
- 5: Flüssigkeitsauslaß
- 6: Haltevorrichtung
- 7: Pumpe
- 8: Mantelfläche
- 9: Einlaßventil
- 10: Filterbehälter
- 11: undurchlässige Einbindung
- 12: Verbindungsleitung
- 13: Verbindungsleitung
- 14: Inneres der Hohlfaser
- 15: zentrale Rückführung
- 16: Sammelraum
- 17: Rückspülleitung
- 18: Rückspülventil
- 19: Vorfilter
- 20: Filterbehälter
- 24: Flüssigkeitseinlaß
- 27: Rückspülleitung
- 28: Rückspülventil
- 29: Einlaßventil
- 30: Filterbehälter
- 31: Rücksprülsammelbehälter
- 40: Filterbehälter
- 50: Verbindungsleitung

## Patentansprüche

1. Flüssigkeitsfilterelement mit wenigstens einem Hohlkörper (1), wobei wenigstens das eine Ende des wenigstens einen Hohlkörpers (1) in einer Trägermatrix (2) eingebunden ist sowie wenigstens das andere Ende des wenigstens einen Hohlkörpers (1) in einer Trägermatrix (2) eingebunden ist, wobei das Flüssigkeitsfilterelement (3) wenigstens einen Flüssigkeitseinlaß (4) und einen Flüssigkeitsauslaß (5) aufweist, wobei das Flüssigkeitsfilterelement (3) über wenigstens eine Haltevorrichtung (6) verfügt.

2. Flüssigkeitsfilterelement nach Anspruch 1, dadurch gekennzeichnet, daß der Hohlkörper (1) aus geschäumtem Kunststoffkapillaren oder Polymerfolien oder Polymer- oder Metallfasern oder Keramikelementen besteht.

3. Flüssigkeitsfilterelement nach einem oder mehreren der vorgenannten Ansprüche, dadurch gekennzeichnet, daß der Hohlkörper eine Stützmatrix im Innern oder außerhalb des Hohlkörpers aufweist.(Rückspülschutz gegen aneinanderkleben)

4. Flüssigkeitsfilterelement nach einem oder mehreren der vorgenannten Ansprüche, dadurch gekennzeichnet, daß beide Enden des Hohlkörpers (1) in derselben Trägermatrix (2) eingebunden sind.

5. Flüssigkeitsfilter nach Anspruch 4, dadurch gekennzeichnet, daß beide Enden des Hohlkörpers (1) parallel zueinander eingebunden sind.

6. Flüssigkeitsfilterelement nach einem oder mehreren der vorgenannten Ansprüche, dadurch gekennzeichnet, daß der Flüssigkeitseinlaß (4) über die Mantelfläche (8) des Hohlkörpers (1) erfolgt.

7. Flüssigkeitsfilterelement nach einem oder mehreren der vorgenannten Ansprüche, dadurch gekennzeichnet, daß der Flüssigkeitsauslaß (5) über die Enden der Hohlkörpers (1) erfolgt.

8. Flüssigkeitsfilterelement nach einem oder mehreren der vorgenannten Ansprüche, dadurch gekennzeichnet, daß die Trägermatrix (2) Bestandteil der Haltevorrichtung (6) ist.

9. Vorrichtung zum Filtrieren von Flüssigkeiten, umfassend wenigstens zwei Filterbehälter und wenigstens eine Pumpe, wobei jeder Filterbehälter über wenigstens einen Einlaß mit Mitteln zum Verschließen desselben und wenigstens einen Auslaß mit Mitteln zum Verschließen desselben sowie wenigstens einen Rückspülablaß mit Mitteln zum Verschließen desselben verfügt, wobei jeder Filterbehälter wenigstens ein Filterelement aufweist, wobei die Pumpe mit dem Einlaß jedes Filterbehälters kommuniziert und die Auslasse sowie die Ablasse der Filterbehälter miteinander kommunizieren, wobei die Vorrichtung ein Filterelement nach einem oder mehreren der vorgenannten Ansprüche enthält.

10. Vorrichtung nach Anspruch 9, dadurch gekennzeichnet, daß die Vorrichtung über Mittel zum Abreinigen des Filterelements verfügt.

11. Vorrichtung nach Anspruch 9 oder 10, dadurch gekennzeichnet, daß die Schmutzablässe mit einem Schmutzauffangbehälter kommunizieren.
